# EUROPÄISCHE PATENTSCHRIFT

(11) **EP 2 166 662 B1**
(45) Veröffentlichungstag und Bekanntmachung des Hinweises auf die Patenterteilung: **06.04.2011**
(21) Anmeldenummer: 08016487.4
(22) Anmeldetag: 18.09.2008
(51) Int. Cl.: H02P 5/46, H02M 7/493

(54) **Maschine mit schwungmassenlosem Pufferantrieb**
Machine with buffer drive without centrifugal mass
Machine dotée d'un entraînement de tampon sans masse d'équilibrage

(43) Veröffentlichungstag der Anmeldung: 24.03.2010
(73) Patentinhaber: Siemens Aktiengesellschaft, 80333 München (DE)
(72) Erfinder: Decker, Jürgen, 91052 Erlangen (DE)

(56) Entgegenhaltungen:
- EP-A- 1 521 356
- EP-A- 1 880 837
- US-A1- 2008 043 501

## Beschreibung

Die vorliegende Erfindung betrifft eine Maschine,
- wobei die Maschine einen Grundkörper und ein Maschinenelement aufweist,
- wobei das Maschinenelement mittels eines elektrischen Nutzantriebs relativ zum Grundkörper bewegbar ist,
- wobei der elektrische Nutzantrieb über einen Nutzumrichter und ein elektrischer Pufferantrieb über einen Pufferumrichter an ein elektrisches Versorgungsnetz angeschlossen sind,
- wobei der Nutzumrichter und der Pufferumrichter von einer Steuereinrichtung entsprechend einer vorbestimmten Fahrbewegung des Maschinenelements derart koordiniert gesteuert werden, dass eine Gesamtbelastung des Versorgungsnetzes durch beide Umrichter zusammen während der gesamten Fahrbewegung des Maschinenelements unterhalb einer durch den Nutzumrichter allein bewirkten Maximalbelastung bleibt,
- wobei der Pufferantrieb eine Antriebswelle aufweist.

Bei Maschinen werden in aller Regel die bewegbaren Maschinenelemente mittels elektrischer Motoren angetrieben (elektrische Nutzantriebe). In vielen Fällen müssen die elektrischen Motoren hierbei hochdynamische Bewegungen ausführen. Beim Beschleunigen und Bremsen der Bewegung kommt es zu hohen Stromspitzen. Normalerweise werden die Stromspitzen direkt aus dem den jeweiligen Antrieb speisenden Versorgungsnetz entnommen bzw. in das Netz generatorisch zurückgeführt. Durch diese Vorgehensweise kommt es zu hohen Belastungen des Versorgungsnetzes. Weiterhin muss aufgrund des hohen Spitzenstrombedarfs die elektrische Infrastruktur wie beispielsweise Versorgungsleitungen, Sicherungen, Schütze, Transformatoren usw. entsprechend dimensioniert werden, so dass sie den Spitzenstrombedarf verkraften kann.

Im Stand der Technik werden bei Maschinen mit hohem Spitzenstrombedarf in der Regel keine besonderen Maßnahmen zu Absenkung der Stromspitzen am Versorgungsnetz getroffen.

Aus der EP 1 880 837 A2 ist bereits bekannt, zusätzlich einen weiteren elektrischen Antrieb vorzusehen (elektrischer Pufferantrieb), an den eine Schwungmasse angebunden ist. Aufgrund des Vorhandenseins der Schwungmasse müssen in diesem Fall erhebliche Sicherheitsvorkehrungen getroffen werden. Insbesondere muss gewährleistet sein, dass auch in dem Fall, dass die Schwungmasse sich vom Pufferantrieb löst, kein gefährlicher Zustand auftritt. Weiterhin muss die Schwungmasse hochgenau ausgewuchtet werden. Anderenfalls kommt es sehr schnell zu einem Lagerverschleiß des Pufferantriebs.

Aus der EP 1 521 356 A2 ist eine Maschine bekannt, die einen Grundkörper und ein Maschinenelement aufweist. Das Maschinenelement ist mittels zweier gleichwirkender Nutzantriebe relativ zum Grundkörper bewegbar. Die Nutzantriebe sind über je einen eigenen Nutzumrichter an ein elektrisches Versorgungsnetz angeschlossen. Die Nutzumrichter werden von einer Steuereinrichtung entsprechend einer vorbestimmten Verfahrbewegung des Maschinenelements koordiniert angesteuert, so dass sie möglichst gleichartig auf das Maschinenelement wirken. Auf Grund ungünstiger Umstände kann es jedoch dazu kommen, dass die erreichbare Maximalleistung des Systems geringer als die Summe der Nennleistungen der einzelnen Nutzantriebe ist.

Aus der US 2008/043501 A1 ist bekannt, eine Last über parallel geschaltete Umrichter zu versorgen.

Die Aufgabe der vorliegenden Erfindung besteht darin, eine Maschine der eingangs genannten Art derart auszugestalten, dass sie einfacher aufgebaut ist und zuverlässiger arbeitet.

Die Aufgabe wird durch eine Maschine mit den Merkmalen des Anspruchs 1 gelöst. Vorteilhafte Ausgestaltungen der erfindungsgemäßen Maschine sind Gegenstand der abhängigen Ansprüche 2 und 3.

Erfindungsgemäß ist vorgesehen, dass an die Antriebswelle des Pufferantriebs keine Schwungmasse angebunden ist.

Es ist möglich, dass der Nutzumrichter und der Pufferumrichter als Direktumrichter ausgebildet sind und das elektrische Versorgungsnetz hiermit korrespondierend als Wechselspannungsnetz ausgebildet ist. Das Wechselspannungsnetz ist in diesem Fall in der Regel als Drehstromnetz ausgebildet, insbesondere als dreiphasiges Drehstromnetz. In der Regel ist jedoch das elektrische Versorgungsnetz als Gleichspannungskreis eines elektrischen Zwischenkreisumrichters ausgebildet. Der Nutzumrichter und der Pufferumrichter sind in diesem Fall als Wechselrichter ausgebildet. Der Gleichspannungskreis ist über einen gesteuerten Gleichrichter an ein Wechselspannungsnetz angeschlossen. Der Gleichrichter wird von der Steuereinrichtung entsprechend der Gesamtbelastung des Versorgungsnetzes, d.h. des Gleichspannungskreises, gesteuert.

Prinzipiell ist es möglich, dass an den Gleichspannungskreis weitere Umrichter angeschlossen sind, um beispielsweise weitere Antriebe mit elektrischer Energie zu versorgen. In der Regel jedoch sind an den Gleichspannungskreis mit Ausnahme des Gleichrichters, des Nutzumrichters und des Pufferumrichters keine weiteren Umrichter angeschlossen.

Weitere Vorteile und Einzelheiten ergeben sich aus der nachfolgenden Beschreibung eines Ausführungsbeispiels in Verbindung mit den Zeichnungen. Es zeigen in Prinzipdarstellung:
- FIG 1: eine Maschine,
- FIG 2: ein Blockschaltbild einer elektrischen Versorgungs- schaltung,
- FIG 3: ein Zeitdiagramm und
- FIG 4: schematisch einen Pufferantrieb.

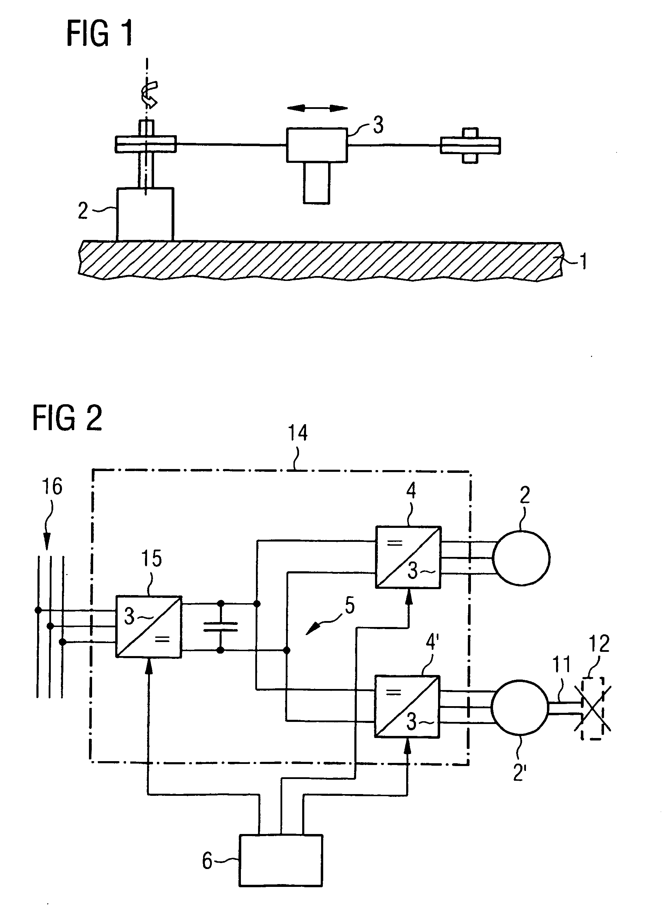

Gemäß FIG 1 weist eine elektrische Maschine einen Grundkörper 1 auf. Die Maschine weist weiterhin einen elektrischen Antrieb 2 auf, der nachfolgend als Nutzantrieb 2 bezeichnet wird. Mittels des Nutzantriebs 2 ist ein Maschinenelement 3 der Maschine relativ zum Grundkörper 1 bewegbar.

Gemäß der Darstellung von FIG 1 ist der Nutzantrieb 2 ein rotatorischer elektrischer Antrieb. Diese Darstellung ist jedoch rein beispielhaft. Alternativ könnte es sich um einen Linearantrieb handeln. Weiterhin wird gemäß FIG 1 das Maschinenelement 3 mittels des Nutzantriebs 2 relativ zum Grundkörper 1 linear bewegt. Auch diese Darstellung ist jedoch rein beispielhaft. Im Rahmen der vorliegenden Erfindung ist lediglich von Bedeutung, dass mittels des elektrischen Nutzantriebs 2 das Maschinenelement 3 bewegbar ist.

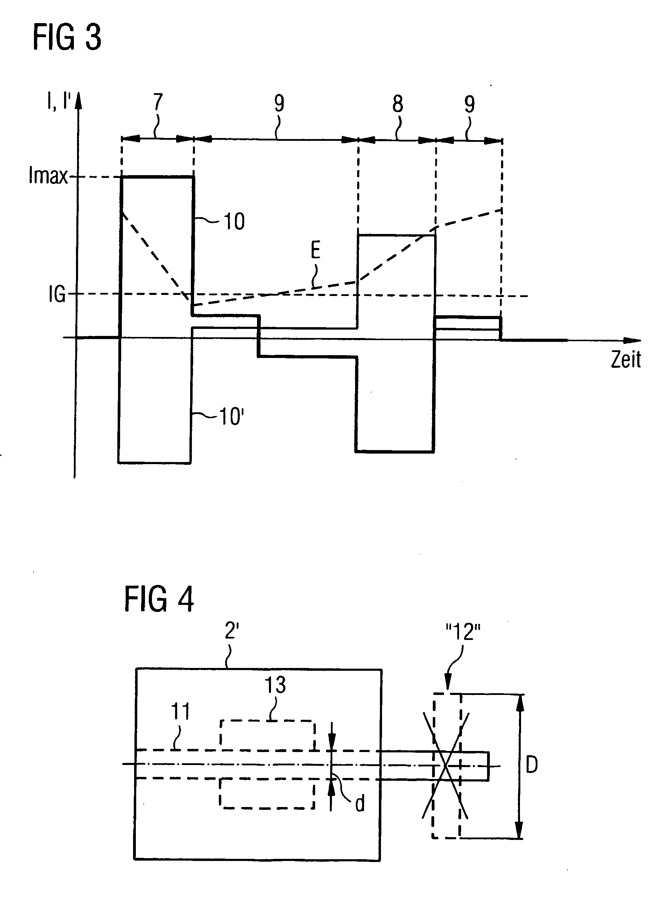

Gemäß FIG 2 ist der elektrische Nutzantrieb 2 über einen Umrichter 4 - nachfolgend als Nutzumrichter 4 bezeichnet - an ein elektrisches Versorgungsnetz 5 angeschlossen. Der Nutzumrichter 4 wird von einer Steuereinrichtung 6 gesteuert. Das Steuern des Nutzumrichters 4 erfolgt entsprechend einer vorbestimmten Fahrbewegung des Maschinenelements 3. Im Rahmen der vorbestimmten Fahrbewegung des Maschinenelements 3 existiert gemäß FIG 3 mindestens eine erste Phase 7, mindestens eine zweite Phase 8 und - zumindest in der Regel - mindestens eine dritte Phase 9. In der ersten Phase 7 entnimmt der Nutzumrichter 4 dem Versorgungsnetz 5 einen hohen Strom I. In der zweiten Phase 8 speist der Nutzumrichter 4 Strom I in das Versorgungsnetz 5 zurück. In der dritten Phase 9 liegt der Strom I zwischen den Werten der ersten Phase 7 und der zweiten Phase 8. Die Ansteuerung des Nutzumrichters 4 für sich betrachtet, bewirkt daher eine Einzelbelastung 10 des Versorgungsnetzes 5, die einen Maximalwert Imax aufweist. Der Maximalwert Imax ist durch den betragsmäßig größten Wert des Stromes I bestimmt.

Gemäß FIG 2 ist ein weiterer Antrieb 2' über einen weiteren Umrichter 4' ebenfalls an das elektrische Versorgungsnetz 5 angeschlossen. Der weitere Antrieb 2' wird nachfolgend zur sprachlichen Unterscheidung vom Nutzantrieb 2 als Pufferantrieb 2' bezeichnet. Ebenso wird der weitere Umrichter 4' zur sprachlichen Unterscheidung vom Nutzumrichter 4 nachfolgend als Pufferumrichter 4' bezeichnet.

Auch der Pufferumrichter 4' wird von der Steuereinrichtung 6 gesteuert. Die Steuerung des Pufferumrichters 4' ist mit der Steuerung des Nutzumrichters 4 koordiniert. Die Koordinierung ist derart, dass - vereinfacht gesprochen - der Pufferumrichter 4' invers zum Nutzumrichter 4 angesteuert wird. Entsprechend der Darstellung von FIG 3 speist der Pufferumrichter 4' in der ersten Phase 7 einen relativ hohen Strom I' in das elektrische Versorgungsnetz 5 ein. Weiterhin entnimmt der Pufferumrichter 4' in der zweiten Phase 8 einen relativ hohen Strom I' aus dem Versorgungsnetz 5. Soweit erforderlich, wird weiterhin in der dritten Phase 9 der Strom I' des Pufferumrichters 4' nach Bedarf eingestellt.

Im Ergebnis wird durch die koordinierte Ansteuerung des Nutzumrichters 4 und des Pufferumrichters 4' erreicht, dass eine Gesamtbelastung IG des elektrischen Versorgungsnetzes 5 durch beide Umrichter 4, 4' zusammen während der gesamten Fahrbewegung des Maschinenelements 3 unterhalb der Maximalbelastung Imax bleibt, die durch den Nutzumrichter 4 allein bewirkt wird.

Im Prinzip sind der entsprechende Aufbau der Maschine und die Betriebsweise der Maschine im Stand der Technik bekannt. Im Stand der Technik ist jedoch gemäß den FIG 2 und 4 an eine Antriebswelle 11 des Pufferantriebs 2' eine Schwungmasse 12 angebunden. Im Stand der Technik ist also die Schwungmasse 12 lösbar mit der Antriebswelle 11 des Pufferantriebs 2' gekuppelt. Die Schwungmasse 12 weist im Stand der Technik einen Außendurchmesser D auf, der erheblich größer als ein Maximaldurchmesser d der Antriebswelle 11 ist. Zur Klarstellung sei hierbei darauf hingewiesen, dass mit dem Begriff "Antriebswelle 11" dasjenige Element des Pufferantriebs 2' bezeichnet ist, auf dem das Rotorblechpaket 13 des Pufferantriebs 4' befestigt ist.

Im Gegensatz zur Vorgehensweise des Standes der Technik ist bei der vorliegenden Erfindung an die Antriebswelle 11 des Pufferantriebs 2' keine Schwungmasse 12 angebunden. Es ist also lediglich die "nackte" Antriebswelle 11 vorhanden. Dies ist in den FIG 2 und 4 dadurch angedeutet, dass die Schwungmasse 12 zwar dargestellt ist, aber nur gestrichelt dargestellt ist und darüber hinaus durchgestrichen ist.

Im Gegensatz zum Stand der Technik wird bei der vorliegenden Erfindung somit ein zur Energiezwischenpufferung lediglich ein elektrischer Antrieb 4' so, wie er ist, verwendet ("off the shelf"). Es muss lediglich beachtet werden, dass die Eigenträgheit des Pufferantriebs 2' und die mögliche Drehzahl des Pufferantriebs 2' geeignet gewählt sind.

Es ist möglich, dass die Umrichter 4, 4' als Direktumrichter ausgebildet sind. Das elektrische Versorgungsnetz 5 ist in diesem Fall als Wechselspannungsnetz ausgebildet. Im Regelfall - siehe FIG 2 - ist das elektrische Versorgungsnetz 5 jedoch als Gleichspannungskreis eines elektrischen Zwischenkreisumrichters 14 ausgebildet. Hiermit korrespondierend sind der Nutzumrichter 4 und der Pufferumrichter 4' als Wechselrichter ausgebildet. Der Gleichspannungskreis 5 des Zwischenkreisumrichters 14 ist über einen gesteuerten Gleichrichter 15 an ein Wechselspannungsnetz 16 (in der Regel ein Drehstromnetz) angeschlossen. In dieser Ausgestaltung, also bei Vorhandensein des Zwischenkreisumrichters 14 und des gesteuerten Gleichrichters 15, wird auch der Gleichrichter 15 von der Steuereinrichtung 6 gesteuert. Die Ansteuerung des Gleichrichters 15 erfolgt entsprechend der Gesamtbelastung IG des Versorgungsnetzes 5.

Beim Beschleunigen und beim Aufbauen eines Gegendrehmoments des Nutzantriebs 2 entnimmt der Nutzantrieb 2 über den Nutzumrichter 4 elektrische Energie aus dem Gleichspannungskreis 5. Der Pufferantrieb 2' wird in dieser Zeitspanne (entspricht im Wesentlichen der ersten Phase 7) als Generator betrieben, der den von ihm erzeugten Strom I' in den Gleichspannungskreis 5 einspeist. Dadurch wird ein vom Pufferantrieb 2' gespeicherter kinetischer Energieinhalt E (siehe FIG 3) verringert. Umgekehrt wird beim Abbremsen des Nutzantriebs 2 (entspricht im Wesentlichen der zweiten Phase 8) der Pufferantrieb 2' beschleunigt, so dass dessen kinetischer Energieinhalt E wieder zunimmt. In der übrigen Zeit (entspricht im Wesentlichen der dritten Phase 9) wird der kinetische Energieinhalt E des Pufferantriebs 2' nach Bedarf eingestellt.

Es ist möglich, an den Gleichspannungskreis 5 weitere Umrichter anzuschließen, über welche weitere Antriebe gespeist werden können. Je mehr Umrichter an den Gleichspannungskreis 5 angeschlossen sind, desto komplexer gestaltet sich jedoch die Steuerung durch die Steuereinrichtung 6. In der Regel sind daher entsprechend der Darstellung von FIG 2 an den Gleichspannungskreis 5 nur der Gleichrichter 15, der Nutzumrichter 4 und der Pufferumrichter 4' angeschlossen. Weitere Umrichter sind an den Gleichspannungskreis 5 nicht angeschlossen.

Die vorliegende Erfindung weist viele Vorteile auf. So ist im Gegensatz zum Stand der Technik kein Schwungrad 12 erforderlich. Weiterhin sind keine speziellen Lager für den Pufferantrieb 2' und das Schwungrad 12 erforderlich. Auch sind Sicherheitsmaßnahmen für den Fall eines unbeabsichtigten Lösens des Schwungrads 12 vom Pufferantrieb 2' nicht erforderlich. Es ergibt sich ein kompakter Aufbau.

Die vorliegende Erfindung ist bei den verschiedensten Maschinen anwendbar. Beispiele geeigneter Maschinen sind Servopressen, Spindelpressen, Scheren, Querschneider, Rohr- und Blechbiegemaschinen, Motorprüfstände usw. Auch Vorschubantriebe oder Drehteller, bei denen hohe Spitzenströme oder Spitzenmomente auftreten können, sind mögliche Anwendungen.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Maschine,
- wobei die Maschine einen Grundkörper (1) und ein Maschinenelement (3) aufweist,
- wobei das Maschinenelement (3) mittels eines elektrischen Nutzantriebs (2) relativ zum Grundkörper (1) bewegbar ist,
- wobei der elektrische Nutzantrieb (2) über einen Nutzumrichter (4) und ein elektrischer Pufferantrieb (2') über einen Pufferumrichter (4') an ein elektrisches Versorgungsnetz (5) angeschlossen sind,
- wobei der Nutzumrichter (4) und der Pufferumrichter (4') von einer Steuereinrichtung (6) entsprechend einer vorbestimmten Fahrbewegung des Maschinenelements (3) derart koordiniert gesteuert werden, dass eine Gesamtbelastung (IG) des Versorgungsnetzes (5) durch beide Umrichter (4, 4') zusammen während der gesamten Fahrbewegung des Maschinenelements (3) unterhalb einer durch den Nutzumrichter (4) allein bewirkten Maximalbelastung (Imax) bleibt,
- wobei der Pufferantrieb (2') eine Antriebswelle (11) aufweist,
**dadurch gekennzeichnet,**
**dass** an die Antriebswelle (11) des Pufferantriebs (2') keine Schwungmasse (12) angebunden ist.

2. Maschine nach Anspruch 1,
**dadurch gekennzeichnet,**
**dass** das elektrische Versorgungsnetz (5) als Gleichspannungskreis eines elektrischen Zwischenkreisumrichters (14) ausgebildet ist, dass der Nutzumrichter (4) und der Pufferumrichter (4') als Wechselrichter ausgebildet sind, dass der Gleichspannungskreis (5) über einen gesteuerten Gleichrichter (15) an ein Wechselspannungsnetz (16) angeschlossen ist und dass der Gleichrichter (15) von der Steuereinrichtung (6) entsprechend der Gesamtbelastung (IG) des Versorgungsnetzes (5) gesteuert wird.

3. Maschine nach Anspruch 2,
**dadurch gekennzeichnet,**
**dass** an den Gleichspannungskreis (5) mit Ausnahme des Gleichrichters (15), des Nutzumrichters (4) und des Pufferumrichters (4') keine weiteren Umrichter angeschlossen sind.

## Claims

1. Machine,
- wherein the machine has a base body (1) and a machine element (3),
- wherein the machine element (3) can be moved relative to the base body (1) by means of an electrical utility drive (2),
- wherein the electrical useful drive (2) is connected to an electrical supply system (5) via a utility converter (4), and an electrical buffer drive (2') is connected to an electrical supply system (5) via a buffer converter (4'),
- wherein the utility converter (4) and the buffer converter (4') are controlled in a coordinated manner by a control device (6), corresponding to a predetermined movement of the machine element (3), such that a total load (IG) on the supply system (5) from both converters (4, 4') together remains below a maximum load (Imax), which is produced solely by the utility converter (4), throughout the entire movement of the machine element (3),
- wherein the buffer drive (2') has a drive shaft (11), **characterized**
**in that** no flywheel mass (12) is linked to the drive shaft (11) of the buffer drive (2').

2. Machine according to Claim 1,
**characterized**
**in that** the electrical supply system (5) is a DC voltage circuit of an electrical intermediate circuit converter (14) in that the utility converter (4) and the buffer converter (4') are inverters, in that the DC voltage circuit (5) is connected to an AC voltage network (16) via a controlled rectifier (15), and in that the rectifier (15) is controlled by the control device (6) in accordance with the total load (IG) on the supply system (5).

3. Machine according to Claim 2,
**characterized**
**in that**, with the exception of the rectifier (15), the utility converter (4) and the buffer converter (4'), no further converters are connected to the DC voltage circuit (5).

## Revendications

1. Machine,
- dans lequel la machine a un corps (1) de base et un élément (3) de machine,
- dans laquelle l'élément (3) de machine est mobile par rapport au corps (1) de base au moyen d'un entraînement (2) électrique utile,
- dans lequel l'entraînement (2) électrique utile est relié à un réseau (5) d'alimentation électrique par un convertisseur (4) utile et un entraînement (2') électrique tampon est relié au réseau (5) d'alimentation électrique par un convertisseur (4') tampon,
- dans laquelle le convertisseur (4) utile et le convertisseur (4') tampon sont commandés de manière coordonnée par un dispositif (6) de commande en fonction d'un trajet de déplacement déterminé à l'avance de l'élément (3) de machine de manière qu'une charge (IG) globale du réseau (5) d'alimentation par les deux convertisseurs (4, 4') ensemble restent, pendant tout le trajet de déplacement de l'élément (3) de la machine, inférieure à une charge (Imax) maximum provoquée par le convertisseur (4) utile seul,
- dans lequel l'entraînement (2') tampon a un arbre (11) d'entraînement,
**caractérisée en ce qu'**une masselotte (12) d'équilibrage n'est pas fixée à l'arbre (11) de l'entraînement (2') tampon.

2. Machine suivant la revendication 1,
**caractérisée en ce que** le réseau (5) d'alimentation électrique est constitué sous la forme d'un circuit de tension continu d'un convertisseur (14) électrique de circuit intermédiaire, **en ce que** le convertisseur (4) utile et le convertisseur (4') tampon sont constitués sous la forme d'un onduleur, **en ce que** le circuit (5) de tension continue est relié à un réseau (16) d'alimentation alternatif par un redresseur (15) commandé et **en ce que** le redresseur (15) est commandé par le dispositif (6) de commande en fonction de la charge (IG) globale du réseau (5) d'alimentation.

3. Machine suivant la revendication 2,
**caractérisée en ce qu'**à l'exception du redresseur (15), du convertisseur (4) utile et du convertisseur (4') tampon, aucun autre convertisseur n'est relié au circuit (5) de tension continue.
